# EUROPEAN PATENT APPLICATION

(11) **EP 1 153 727 A2**
(43) Date of publication of application: **14.11.2001**
(21) Application number: 01201287.8
(22) Date of filing: 09.04.2001
(51) Int. Cl.: B29C 45/72

(54) **Machine for the production of preforms for hollow plastic containers**

(30) Priority: 11.04.2000 IT MI000786
(71) Applicant: Magic MP S.p.A., Seregano (Milano) (IT)
(72) Inventor: Giacobbe, Ferruccio, Monza(Milano) (IT)
(74) Representative: Raimondi, Alfredo, Dott. Ing. Prof.

(57) **Abstract**

Machine for the manufacture of preforms (2) for plastic containers, comprising at least one station (10) for moulding the preforms and at least one apparatus (30) for injection of the plastic into the moulding station, comprising at least two stations (20) for cooling the preforms (2), symmetrically arranged with respect to the moulding station (10), there also being provided conveying means (50;150) movable with an alternating movement from the moulding station (10) to one of the two cooling stations (20) and vice versa for conveying the preforms (2) to the said cooling stations.

## Description

The present invention relates to a machine for the manufacture of preforms for plastic containers.

It is known in the art of packaging liquid products and the like that there is the need to manufacture plastic containers suitable for this purpose.

It is also known that said containers are formed in suitable apparatus in which a predefined quantity of material is injected into a mould and then undergoes a first mechanical deforming operation involving stamping so as to obtain a so-called "preform" which then undergoes a heat treatment and blowing so as to produce the final form of the container.

It is also known that said cycle may be divided up into two separate steps performed on different machines respectively for production of the "preforms" and blowing thereof in order to obtain the finished containers.

In greater detail the known machines for the production of the preforms are based on the use of moulds formed by two half-parts which may open and close, moving in a horizontal plane so as to allow injection and extraction of the preforms which must subsequently be cooled.

These machines of the known type, although performing their function, nevertheless have certain drawbacks such as the large dimensions and low productivity due to the slowness in opening of the moulds or the need for the preforms to remain for a long time inside them in order to cool.

In addition to this, said slowness of the cycle results in the need to increase the dimensions of the moulds so as to be able to obtain a high hourly production output, although this results in notable handling difficulties and therefore renewed slowness associated with changes in the shape or size.

The technical problem which is posed, therefore, is that of providing a machine for the production of preforms for plastic containers, able to allow correct cooling of the preforms before they are unloaded from the machine and at the same time a high hourly production output.

Within the scope of this problem a further requirement is that the machine should allow a rapid change in the shape or size of the moulds and/or the necks of the preforms in order to reduce the production downtime.

These technical problems are solved according to the present invention by a machine for the manufacture of preforms for plastic containers, comprising at least one station for moulding the preforms and at least one apparatus for injection of the plastic into the moulding station, in which there are provided at least two stations for cooling the preforms, symmetrically arranged with respect to the moulding station, there also being provided conveying means movable with an alternating movement from the moulding station to one of the two cooling stations and vice versa for conveying the preforms to the said cooling stations.

Further details may be obtained from the following description of a non-limiting example of embodiment of the invention, provided with reference to the accompanying plates of drawings in which:
- Figure 1 shows a front view of the machine according to the present invention;
- Figure 2 shows a side view of the machine according to Fig. 1;
- Fig. 3 shows a schematic section along the plane indicated by III-III in Fig. 2;
- Figs. 4a, 4b show respectively a schematic section and a side view of the machine during the injection step;
- Figs. 5a, 5b show a schematic section and a side view of the machine during the moulding step;
- Figure 6 shows the machine according to Fig. 1 after moulding has been performed and with the preforms being conveyed to the cooling station;
- Figs. 7a,7b shows a schematic view and side view of the machine at the end of conveying of the preforms;
- Figure 8a shows a front view of the machine during insertion of the preforms in the cooling containers;
- Figure 9 shows a front view of the machine during cooling of the preforms; and
- Figs. 10a, 10b show respectively a front view and a section during the step involving gripping of the preforms from the cooling seat and depositing thereof onto the means for unloading thereof;
- Figs. 11a, 11b show a first variation of an example of embodiment of the cooling station;
- Figs. 12a, 12b show a machine according to the invention oriented in the transverse direction Y-Y;
- Figs. 13a,13b show a machine according to the invention with rotational movement of the carriages for conveying the preforms; and
- Figs. 14a,14b show respectively a linear and rotating version of the machine according to the invention with twin injection.

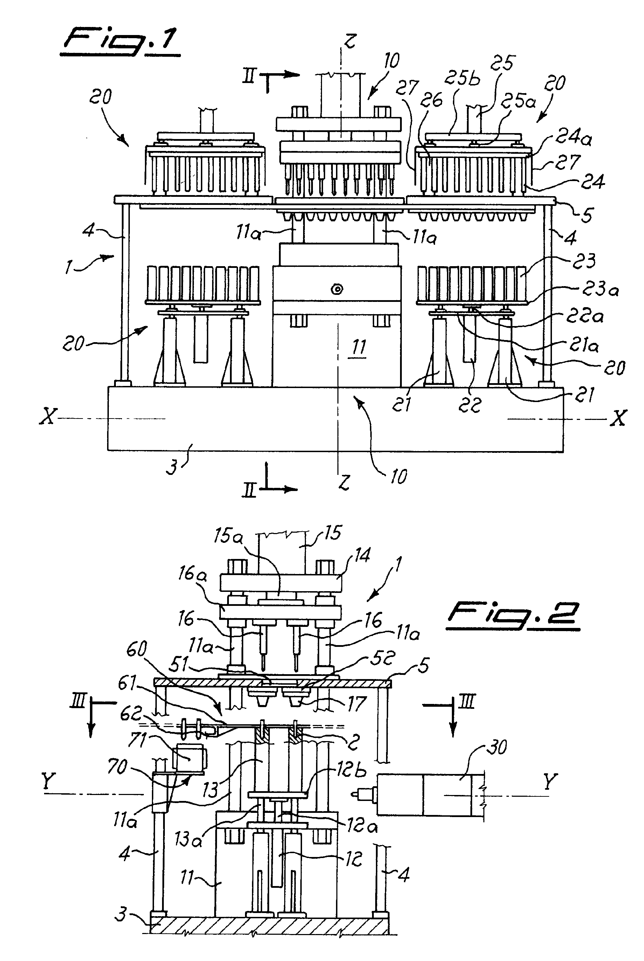

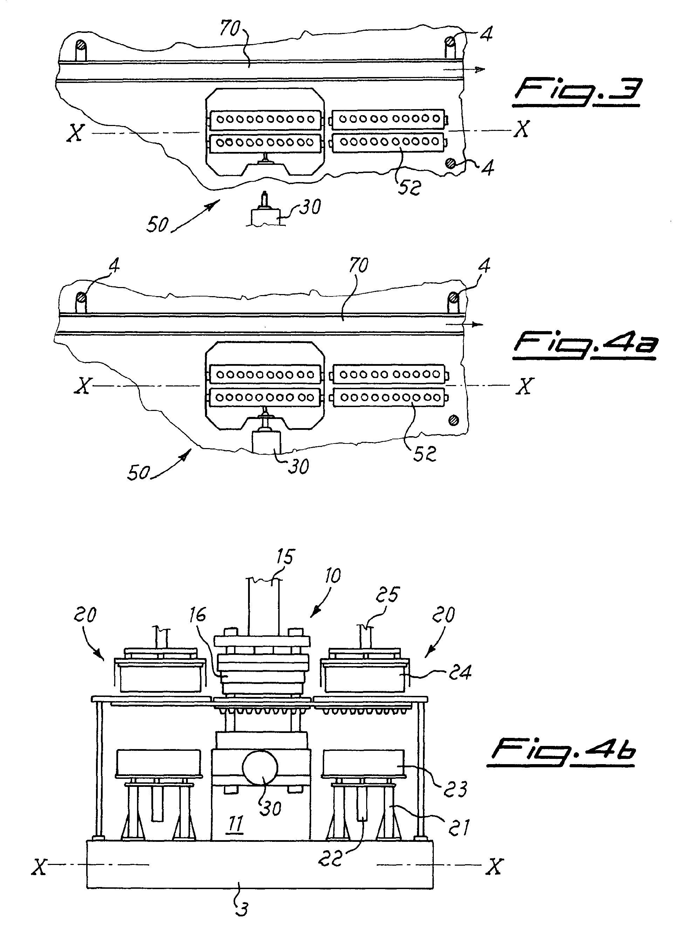

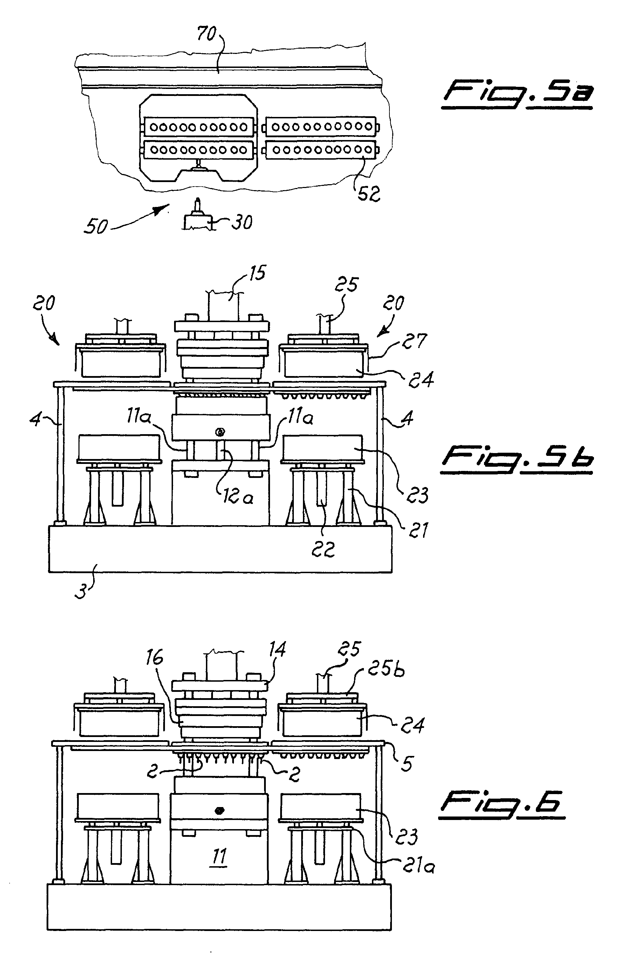

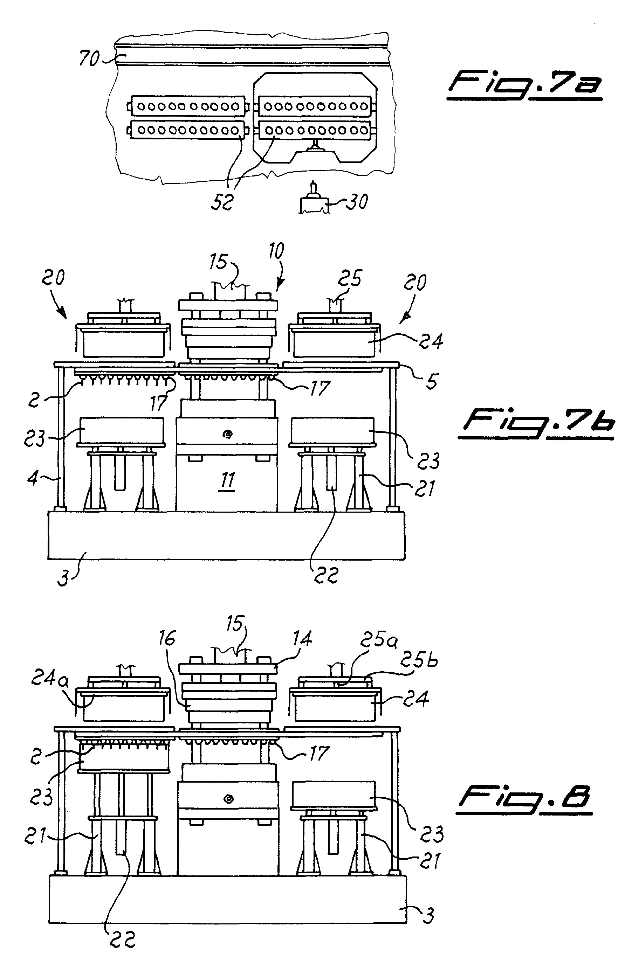

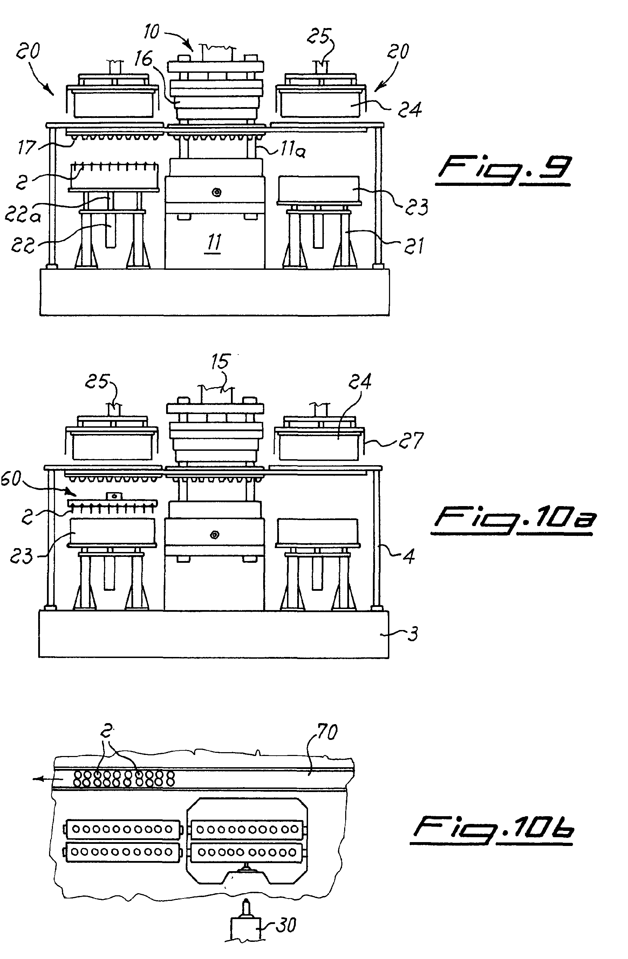

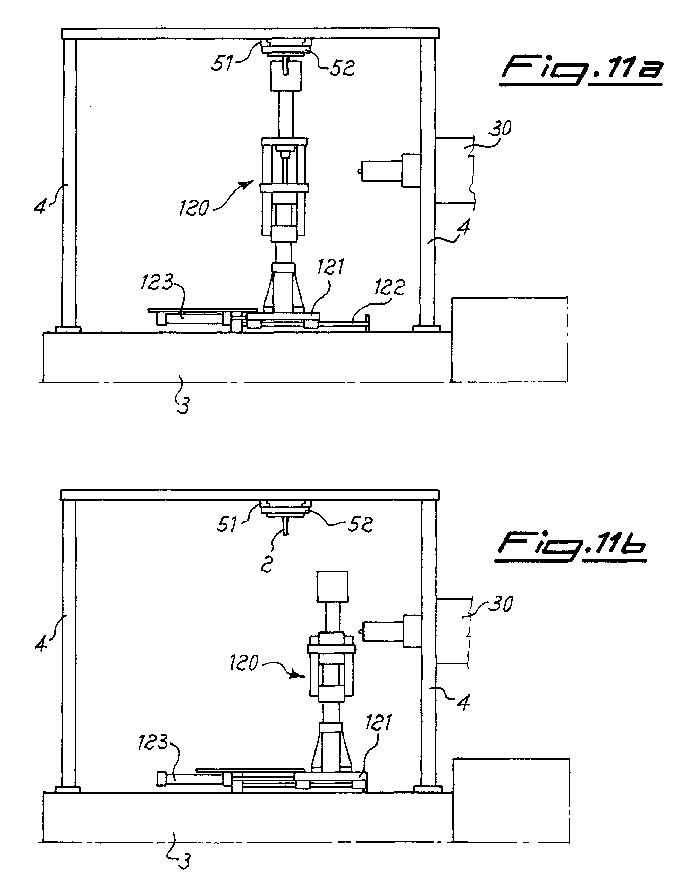

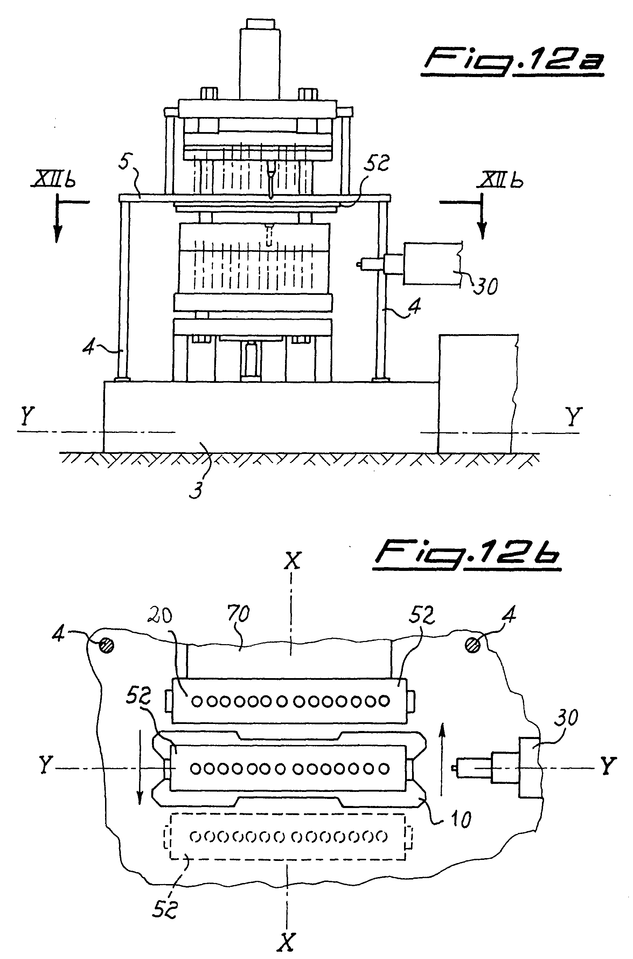

As illustrated in Figures 1, 2 and 3, the machine 1 for manufacture of the preforms 2 according to the present invention essentially consists of a base 3 to which upright columns 4 are joined, the latter having a horizontal surface 5 fixed to their top end.

For the sake of easier reference, the three directions of the machine are defined as follows: longitudinal direction X-X, transverse direction Y-Y and vertical direction Z-Z.

The base 3 and the top surface 5 have, arranged between them, the moulding station 10 and the cooling stations 20 symmetrically located on opposite sides of the central moulding station 10.

The moulding station 10 also has, associated with it, an extruder 30 designed to inject into the moulding station the melted material from which the preforms are to be obtained.

In greater detail the moulding station 10 comprises:
- an associated base 11 to which two columns 11a passing through the top surface 5 and suitably extending beyond the latter are joined.

The base 11 also has, joined to it, a cylinder 12, the rod 12a of which is connected to a plate 12b supporting the female mould 13 which is therefore able to be displaced in a vertical direction in both senses guided by respective posts 13a fixed to the base 3.

The top end of the columns 11a has, fixed thereto, an additional plate 14 supporting a cylinder 15, the rod 15a of which is integral with a flange 16a carrying a plurality of male countermoulds 16 coaxial with the female moulds 13.

In this way the countermoulds 16 are able to move in the vertical direction Z-Z, in both senses, so as to be inserted into/extracted from the associated female moulds.

The horizontal surface 5 also has, joined to it, rails 51 which extend in the longitudinal direction X-X and on which there are movable carriages 52 supporting hollow jaws 17 which, in the working condition, are coaxially located between each female mould 13 and the associated male countermould 16.

Each cooling station 20, symmetrically arranged on opposite sides of the moulding station 10, has a base consisting of two posts 21 between which a surface 21a is arranged, said surface in turn carrying a cylinder 22, the rod 22a of which is joined to a surface 23a supporting the hollow containers 23, in the wall of which a cooling fluid is recirculated.

Coaxially with said hollow containers 23, the cooling station also has pistons 24 integral with a horizontal surface 24a supported by the rod 25a of a cylinder 25 mounted on a surface 25b joined to columns 26 fixed to the surface 5.

Said pistons are in turn cooled so as to help cool the preforms 2.

Levers 27 extending in the vertical direction Z-Z are arranged at the opposite lateral ends of said surface 24a, said levers forming the means for opening the hollow jaws 17 as will emerge more clearly below.

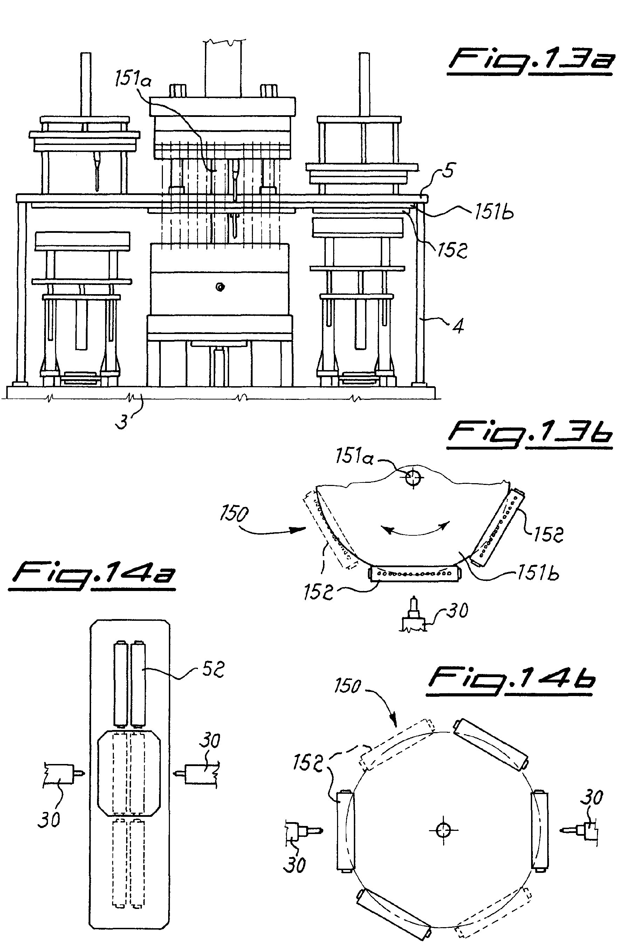

The machine according to the invention also has means 60 for removing the preforms from each cooling station 20 and depositing them on a conveyor belt 70 arranged at the rear of the machine and extending parallel to the longitudinal axis X-X thereof. In greater detail said removing means 60 consist of a plurality of grippers 62 integral with an arm 61 (Fig. 2) which can be actuated translatably by suitable actuating means (known per se and therefore not shown) from a position substantially located above the conveyor belt 70 to a position substantially coaxial with the cooling seats 22 and vice versa.

In a further embodiment of the removing means, the arm 61 is able to rotate about a horizontal axis parallel to the longitudinal axis X-X of the machine, it being envisaged in this case that the preforms must be inserted into corresponding containers 71 arranged above the conveyor belt 70.

Since the bottom of the preforms is not flat, the said preforms must be introduced into the container at the mouth end and must then be overturned by rotation of the arm 61 before being deposited inside the container 71.

The operating principle of the machine is as follows:
- at the start of the cycle the machine has the moulding station 10 and cooling stations 20 open and the carriages 52 for conveying the jaws 17 arranged respectively in the central moulding station 10 and in one of the two lateral cooling stations 20; the injector 30 during this step is disconnected (Figs. 1, 2 and 3);
- the injector 30 is inserted into the special seat of the mould 10 for introduction of the required quantity of plastic (Figs. 4a,4b);
- the injector is retracted (Fig. 5a) and the female moulds 13 raised by means of the cylinder 12 until they engage with the hollow jaws 17 integral with the carriages 52 (Fig. 5b);
- the male countermoulds 16 are lowered by means of the cylinder 15 so as to obtain the preforms 2 with an internal cavity;
- the moulds and countermoulds are moved away so as to free the jaws 17 and the preforms 2 (Fig. 6);
- the translation of the carriages 52 is performed in the longitudinal direction X-X so that the central carriage is positioned in the lateral cooling station and the carriage which was in the other cooling station is positioned in a central position corresponding to the moulding position (Figs. 7a,7b);
- the hollow containers 22 of the cooling station 20 are raised until they engage with the preforms 2 and the associated jaws 17 for retaining them (Fig. 8);
- at the same time a new quantity of material is injected into the moulding station;
- the upper pistons 23 are lowered, freeing the preforms 2 from the jaws 17 which are opened by the simultaneous lowering of the levers 27, pushing the said preforms into the respective cooling seats and helping them to cool (Fig. 9);
- at the same time, in the moulding station 10, a further preform moulding cycle is performed;
- once said moulding has been performed and the preforms are freed, the pair of carriages 52 are moved in the opposite direction to the previous direction so that the lateral carriage assumes the central position and the central carriage moves into the lateral cooling station;
- in the meantime cooling of the preforms 2 previously deposited in the first cooling station 20 has been completed and they are therefore removed by the gripping means 60 which deposit them onto the exit conveyor belt 70, thus freeing the cooling station which is ready to receive the new series of moulded preforms which are moved into the said station by renewed displacement of the conveying carriages.

It is therefore obvious how the machine according to the invention - which is formed by a central moulding station, by two lateral cooling stations and by means for conveying the preforms, movable with an alternating rectilinear movement from one station to another - allows the preforms to be left for double the cooling time compared to the moulding cycle since each cooling station must be left free for every two cycles of the moulding station; in this way the preforms are sufficiently and correctly cooled - and therefore hardened - when removed and deposited onto the belt so that they do not suffer any damage during conveying.

As previously described, containers for packaging of the preforms may be deposited on the conveyor belt: in this case the arm 61 for removing the preforms from the cooling station will overturn them, rotating about a horizontal axis during the movement from the position located above the cooling seats (gripping of the preforms) into the position located above the container (release of the preforms).

Numerous variations may be envisaged in the practical realisation of the machine as, for example, illustrated in Figs. 11a and 11b which show a cooling station 120 mounted on slides 121 movable along rails 122 arranged parallel to the transverse direction Y-Y of the machine; the displacement, which is for example translatory in nature - is performed by associated actuating means which by way of example are in the form of a cylinder 123.

In greater detail the station 120 may be displaced from a working position located axially underneath the carriages 52 carrying the preforms 2 (Fig. 11a) into a position which is offset (Fig. 11b) with respect to the said carriages (in the example of the figure towards the injector 30) so as to leave the position free and allow the entry, if required, of additional means (not shown) for removing the preforms in order to convey them to a next working stage.

As illustrated in Figs. 12a, 12b, the machine may also be formed with moulding stations 10 and cooling stations 20 arranged in a direction substantially parallel to the transverse direction Y-Y so that the displacement of the carriages 52 is performed in the longitudinal direction X-X.

With this configuration it is possible to reduce both the overall dimensions on the ground and the travel of the carriages from one station to the other.

In this case the conveyor belt 60 is arranged in-line in the longitudinal direction X-X.

In a further embodiment of the machine according to the invention (Figs. 13a,13b) it is envisaged that conveying of the preforms from the moulding station 10 to the cooling stations 20 is performed by means 150 movable with an alternating rotating movement, instead of with an alternating rectilinear movement.

This configuration envisages a central shaft 151a having, fixed therewith, a table 151b which is for example circular and to which the carriages 152 for gripping the preforms are joined.

Suitable operating and control means (known per se and therefore not illustrated) cause an alternating rotary movement of the table so that the carriages 152 arranged tangentially with respect to the table 151b are arranged aligned with the underlying stations 10,20, respectively.

Figs. 14a,14b show two machines according to the invention respectively with a linear movement and rotating movement, both in the twin-injection version: in this configuration it is envisaged doubling the moulding stations 10 and the cooling stations 20 which are arranged parallel and alongside each other; consequently a second injector 30 facing the first one is envisaged, so that the two moulding stations may be supplied simultaneously and the whole of the operating cycle already described may be duplicated, resulting in a consequent doubling of the production output, while leaving substantially unchanged the operating devices of the carriages 52 which are in turn doubled compared to the machine with a single injector.

## Claims

1. Machine for the manufacture of preforms (2) for plastic containers, comprising at least one station (10) for moulding the preforms and at least one apparatus (30) for injection of the plastic into the moulding station, **characterized in that** it comprises at least two stations (20) for cooling the preforms (2), symmetrically arranged with respect to the moulding station (10), there also being provided conveying means (50;150) movable with an alternating movement from the moulding station (10) to one of the two cooling stations (20) and vice versa for conveying the preforms (2) to the said cooling stations.

2. Machine according to Claim 1, **characterized in that** said moulding station (10) comprises female moulds (13) and male moulds (16) coaxial with each other and movable in both senses in a vertical direction (Z-Z) for mutual engagement/disengagement.

3. Machine according to Claim 2, **characterized in that** said male moulds (16) and female moulds (13) are actuated by associated operating means.

4. Machine according to Claim 3, **characterized in that** said operating means consist of respective cylinders (12,12a,15,15a).

5. Machine according to Claim 2, **characterized in that** means for retaining the preforms after moulding are located between said female moulds and male moulds.

6. Machine according to Claim 5, **characterized in that** said retaining means consist of hollow jaws (17) which can be closed/opened around one end of said preforms.

7. Machine according to Claim 1, **characterized in that** said means (30) for injection of the plastic into the moulding station are movable translationwise in a transverse direction (Y-Y) with respect to the machine from a position removed from the females moulds (13) into a position where they are inserted in them.

8. Machine according to Claim 1, **characterized in that** said cooling stations comprises at least one female seat (23) inside which the preform (2) is inserted after moulding.

9. Machine according to Claim 8, **characterized in that** said cooling seats are movable in a vertical direction (Z-Z) from a lowered rest position to a raised position for removing the preforms from the conveying means (50).

10. Machine according to Claim 8, **characterized in that** it comprises pistons (24) coaxially arranged with respect to each cooling seat and in turn movable in a vertical direction from a disengaged position into a position inserted in the respective seat.

11. Machine according to Claim 10, **characterized in that** said pistons are mounted on a support (24a) to which means (27) for opening the said jaws (17) for retaining the preforms are joined.

12. Machine according to Claim 1, **characterized in that** said means for conveying the preforms move along a rectilinear path.

13. Machine according to Claim 12, **characterized in that** said means for conveying the preforms consist of carriages (52) movable on respective rails (51) integral with the frame of the machine.

14. Machine according to Claim 13, **characterized in that** said jaws (17) for retaining the preforms are joined to the carriages (52).

15. Machine according to Claim 13, **characterized in that** said carriages are actuated by associated operating means designed to impart an alternating rectilinear movement to them.

16. Machine according to Claim 1, **characterized in that** said means (150) for conveying the preforms move along a path in the form of an arc of a circumference.

17. Machine according to Claim 16, **characterized in that** said conveying means (150) comprise carriages (152) joined to a rotating table (151b).

18. Machine according to Claim 17, **characterized in that** said rotating table (151b) is rotationally actuated by associated operating means (151a).

19. Machine according to Claim 18, **characterized in that** said operating means consist of a vertical shaft (151a) moved by associated actuating devicess.

20. Machine according to Claim 17, **characterized in that** said carriages (152) are arranged tangentially with respect to the rotating table (151b).

21. Machine according to Claim 1, **characterized in that** means (60) for unloading the preforms (2) are arranged in each cooling station.

22. Machine according to Claim 21, **characterized in that** said unloading means consist of grippers (62) mounted on an arm (61) movable from a position located above the cooling seats (13) into a position located above the zone for conveying away the preforms from the machine.

23. Machine according to Claim 22, **characterized in that** said arm (61) is movable with an alternating rectilinear movement between said two positions for gripping and releasing the preforms.

24. Machine according to Claim 22, **characterized in that** said arm (61) is movable with an alternating rotary movement between said two positions for gripping and releasing the preforms.

25. Machine according to Claim 21, **characterized in that** it comprises means (70) for removing the preforms from the machine.

26. Machine according to Claim 25, **characterized in that** said removing means consist of a conveyor belt (70) extending parallel to the longitudinal direction (X-X) of the machine.

27. Machine according to Claim 25, **characterized in that** said means (70) for removing the preforms are arranged on the opposite side to the injector (30) in the transverse direction (Y-Y) of the machine.

28. Machine according to Claim 1, **characterized in that** said moulding stations (10) and cooling stations (20) extend parallel to a longitudinal direction (X-X) of the machine and the alternating movement of the carriages (52) occurs in the same direction.

29. Machine according to Claim 1, **characterized in that** said moulding stations (10) and cooling stations (20) extend parallel to a transverse direction (Y-Y) of the machine and are located alongside each other in a longitudinal direction (X-X) along which the alternating movement of the carriages (52) also occurs.

30. Machine according to Claim 1, **characterized in that** said cooling stations (20) are movable translationwise in a direction parallel to the transverse axis of the machine.

31. Machine according to Claim 30, **characterized in that** said cooling stations are mounted on slides (121) movable on rails (122) upon operation of associated actuating means (123).

32. Machine according to Claim 1, **characterized in that** it envisages two moulding stations (10) and four cooling stations (20).
